# EUROPEAN PATENT SPECIFICATION

(11) **EP 0 487 148 B1**
(45) Date of publication and mention of the grant of the patent: **08.04.1998**
(21) Application number: 91202974.1
(22) Date of filing: 15.11.1991
(51) Int. Cl.: A01B 29/06, A01B 29/04, A01B 49/02

(54) **A soil cultivating machine**
Bodenbearbeitungsmaschine
Dispositif de labourage

(30) Priority: 19.11.1990 NL 9002514
(43) Date of publication of application: 27.05.1992
(73) Proprietor: C. van der Lely N.V., NL-3155 PD Maasland (NL)
(72) Inventor: van der Lely, Ary, NL-3155 PD Maasland (NL); Bom, Cornelis Johannes Gerardus, NL-3181 VC Rozenburg (NL)
(74) Representative: Mulder, Herman

(56) References cited:
- EP-A- 0 242 932
- EP-A- 0 255 751
- EP-A- 0 295 510
- EP-A- 0 298 565
- DE-U- 8 709 075
- DE-U- 8 913 171
- FR-A- 2 336 063

## Description

The present invention relates to a soil cultivating machine having a frame which is couplable to a tractor and is provided with soil working members, as well as with a packer roller connected to the frame via one or more arms, whilst furthermore a carrier coupled to the arms is present at the rear side of the roller, one or a plurality of scrapers for scraping the cilindrical surface of the roller and arranged movably relative to the roller, being connected to this carrier by means of supports.

A machine of this type is known from the European patent application EP-A-0 298 565. Such like constructions generally apply to machines with a so-called packer roller, which is characterized by a closed cylindrical roller part provided with radially extending cams, usually arranged in crowns or rings, for keeping the roller in motion. The scrapers usually act on the cylindrical surface between said crowns, with a scraper edge extending parallel to the roller axis. In the state of the art machine, the scrapers are hingeably connected to the carrier and pulled against the roller by a pull-spring fitted between the relevant scraper arm and the carrier. In earlier or cheaper constructions the scraper can be positioned relative to the roller with the aid of a slotted hole with bolt/nut construction. This construction has for a disadvantage that it is generally laborious and difficult for an adequate operation of the scrapers, to fix the scrapers at a short distance from and parallel to the roller. During fixing of this position, the scraper may, however, be moved from its position by tightening the nuts. An adequate and proper fixing of the scraper can only be obtained with a lot of trouble and requires auxiliary means. This known construction on the other hand has for advantage that a sturdy construction is achieved, capable of countering huge forces during the scraping of earth stuck to the roller surface. In EP-A-0 298 565, it seemed that a solution of the positioning problem was found by pushing the scrapers under spring action against the roller wall, the scrapers then being pivotal about a shaft arranged parallel to the roller. This construction in many circumstances has indeed an adequate scraping action and renders a manual positioning superfluous. This construction has, however, the disadvantage that the scraper is subjected to excessive wear, which again requires maintenance operations. The same document suggests the application of a roller, rotatably connected to a scraper arm, and functioning as a distance member between roller and scraper. From EP-A-0 255 751 the application of an adjustable distance element between a roller arm and a carrier arm is known in the form of a bolt end, keeping a relevant carrier arm, pulled towards the roller and the roller arm by means of a pull spring, at a distance. Both latter constructions, in practice appear to have the disadvantage that in difficult conditions the scrapers may deflect rearwardly under the severe forces acting thereon, of soil stuck to the roller surface.

The present invention has for its object to facilitate positioning of the scrapers without the drawback of excessive wear, yet to maintain the capability, i.e. also under severe conditions, of resisting the forces acting on the scrapers through earth stuck to the roller. According to the invention, means are present for keeping a scraper which is movable relative to the roller at a relatively short but adjustable maximum distance from the roller by spring action, the means comprising a pressure spring and a bolt/nut connection. In this way scrapers may conveniently be adjusted towards or away from the roller surface, while maintaining these functions even in difficult circumstances, and independently from following machines, possibly coupled to the cultivating machine.

It is observed that from the German Gebrauchsmuster 8913171 a construction is known, wherein a sustaining element for sustaining the machine, having a plate-shaped part extending horizontally immediately behind the rotors of the cultivating machine, is mounted in the machine by means of a pressure spring mounted around a bolt/nut construction and extending between the sustaining element and the machine frame. To the rear of the sustaining element a segmented roller with ring-like roller elements is arranged. The sustaining element is provided with scraper parts extending rearwardly between the roller elements. The scraper elements may according to a further example in said document reach towards a rear side of and around the roller elements.

A simple though advantageous setting of a scraper is obtained, in accordance with the invention, with the aid of the bolt/nut connection. Although other types of positioning of the spring-loaded element are possible, it is advantageous, also in accordance with the invention, to provide the spring element about the bolt.

A specific construction is obtained when the support is pivotably connected to the carrier, the spring element being operative between support and carrier. To render this possible, the carrier must be adapted for the purpose. In accordance with the invention, the carrier is therefore provided with connecting plates which are arranged perpendicularly to the carrier and to which and wherebetween a support is pivotally connected. So as to enable an advantageous positioning of the spring, a cross-connection against which one of the ends of the spring-loaded element bears is provided between the connecting plates. A cheap and effective construction is obtained, in accordance with the invention, when the carrier is pivotably connected to the roller arms via carrier arms which are rigidly connected to the carrier and together with the carrier form a carrier structure, the spring-loaded element being active between the carrier structure and the roller arms. An alternative for the pivotal structure is to provide the carrier, in accordance with the invention, with slide-like elements in which a support is shiftable, the support being provided with a stop onto which the spring-loaded element acts. It is alternatively possible for a support to be provided with slide-like elements in which a scraper is shiftable, the scraper having a stop onto which the spring-loaded element acts.

For a better understanding of the invention and to show how the same may be carried into effect, reference will now be made, by way of example, to the accompanying drawings, in which:
Figure 1 is a plan view of a soil cultivating machine connected to a tractor, in this case a p.t.o.-driven rotary harrow, which is fitted with a packer roller;
Figure 2 is a side view taken on the arrow II in Figure 1, in which the packer roller is provided with a scraper in accordance with the invention;
Figure 3 is a cross-sectional view taken on the lines III-III in Figure 2;
Figure 4 shows a second embodiment of the construction in accordance with the invention;
Figure 5 shows an other embodiment of the construction in accordance with the invention, and
Figure 6 shows yet an other embodiment of the construction in accordance with the invention.

Corresponding components in the drawings are given the same reference numerals. The embodiments illustrated and described serve as an illustration of the inventive idea as claimed.

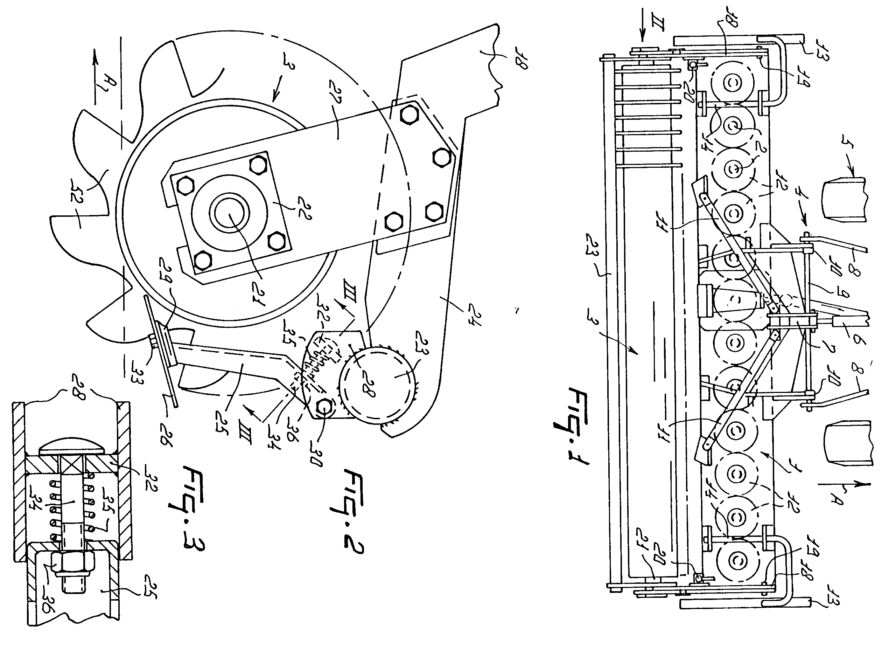

The soil cultivating machine shown in Figure 1 predominantly comprises a frame 1 having connected thereto the rotatable soil working members which are drivable about vertical shafts 2, and a packer roller 3 with which the worked soil can be additionally pulverized, compacted and slightly levelled. The frame 1 includes a three-point lifting trestle 4, via which the machine can be coupled to the three-point lifting hitch of a tractor 5. The top rod 6 of the tractor 5 is then coupled to the top rod 7 of the trestle 4. The lowermost lifting arms 8 of the tractor 5 are coupled in known manner to the trestle 4 using the rod 9. The tractor 5 and the soil cultivating machine coupled thereto travel during operation in the direction A. At its rear side, the trestle 4 is fitted with connection points for optionally coupling a second implement thereto. From the top rod 7 of the trestle two struts 11 extend on both sides of the top predominantly laterally and downwardly to the rear side of the frame 1. Two rotors whose teeth describe a path along the circles 12 are mounted in known manner in the frame 1. At the ends of the frame 1, the machine is provided with side plates 13 which are folded upwardly around side plate-shafts 14 mounted transversely to the frame.

Behind the frame, the roller 3 is connected to the frame 1 via roller arms 18. The roller arms 18 are pivotal about a shaft 19 arranged at the outer ends of the frame. In the present machine, these arms 18 and consequently the land roller 3 are adjustable in height by means of threaded spindles 20 which are connected to the arms 18 and at their lower ends bear against the frame 1. The packer roller 3 is rotatable about a shaft 21. At the rear side, the packer roller 3 is provided with a carrier 23 for carrying the supports 25 of the scrapers 26. The carrier 23 is coupled to the arms 18 of the roller via rigidly connected carrier arms 24. The carrier 23 and the carrier arms 24 together form a carrier structure. The carrier 23 basically extends parallel to the packer roller 3. As is shown in Figures 2, 5 and 6, supports 25 to whose ends scrapers 26 are fitted are connected to the carrier 23. These scrapers 26 remove any clotted earth from the roller 3, so that its levelling and pulverizing action is preserved and thus the roller 3 is prevented from getting filled with clogging earth, as in the latter case the roller would not be capable of rotation any more.

Figure 2 shows one of the arms 18 for the roller 3, to which both the carrier 23 and, via an extension member 27, the packer roller 3 is connected. The packer roller 3, in this case with crowns of cams 52, has its shaft 21 passed through a bearing plate 22, which bearing plate 22 is bolted to the extension member 27 of the arms 18 of the roller 3. Connection plates 28 which extend in pairs perpendicularly to the carrier are welded to the carrier 23, a support 25 being capable of pivoting between these plates 28. To that end, the plates 28 are provided with a bore, in such a manner that a shaft 30 for pivoting of the support 25, which extends parallel to the roller 3, is passed through said bore. The spacing between the plates 28 is preferably such that the lateral movement of a support 25 pivoting between them is limited. The support 25 is made of iron having a channel profile and its upper end is also provided in its side edges with a bore, through which the said shaft 30 for pivoting of the support 25 is passed. At some distance from the pivotal shaft 30, in the direction facing the roller, an intermediate section 32 is arranged between the connection plates 28. This intermediate section 32 is provided with a square aperture, through which a carriage bolt 34 is passed with a tight fit. A portion of the carriage bolt 34 is passed with a loose fit through a bore in the back of the support 25. A push spring 35 is provided around the bolt section between the intermediate section 32 and the back of the support 25. A nut 36 around the carriage bolt 34 prevents the carriage bolt 34 from sliding from the support 25 and thus acts as a stop. The bore in the back of the support 25 is comparatively large, so that a pivotal motion of the support 25 is possible. A plate-like end section 29 is welded to the bottom side of the support 25. This end section 29 is provided with a bore, so that a scraper 26 can be clamped against the end section 29 with the aid of a bolt and nut 33. The scraper 26 is shaped as a rectangular piece of sheet iron. This piece is clamped against the end section 29 in such a manner that the short sides of the sheet iron extend parallel to the shaft of the packer roller.

The construction operates such that the scraper is kept remote from the roller under spring action, so that wear of the scraper plate is prevented. At the same time, however, simply by tightening the nut 36, the scraper can be moved very close to the roller 3, so that its scraping function can be preserved. Should, after a long period of time, the scraper 26 become too short because of the wear caused by the scraped earth to allow adequate readjustment by means of the carriage bolt 34, the scraper 26 can be rotated through 180° about the bolt/nut 33. In the present construction it is possible, in contrast to the structure in which the scraper is fitted by means of a slotted hole, to obtain a proper positioning of the scraper 26 in a simple manner. The procedure to achieve this includes the method, in which the scraper 26, just before it is tightened with a clamp fit, is kept against the roller 3, for example by means of the shoe sole, whilst in the mean time the nut 33 is clamped tightly. This fixes the edge of the scraper parallel to the roller. After this clamping operation, the scraper 26 bounds back and thereafter the proper distance to the roller can be set by tightening the nut 36.

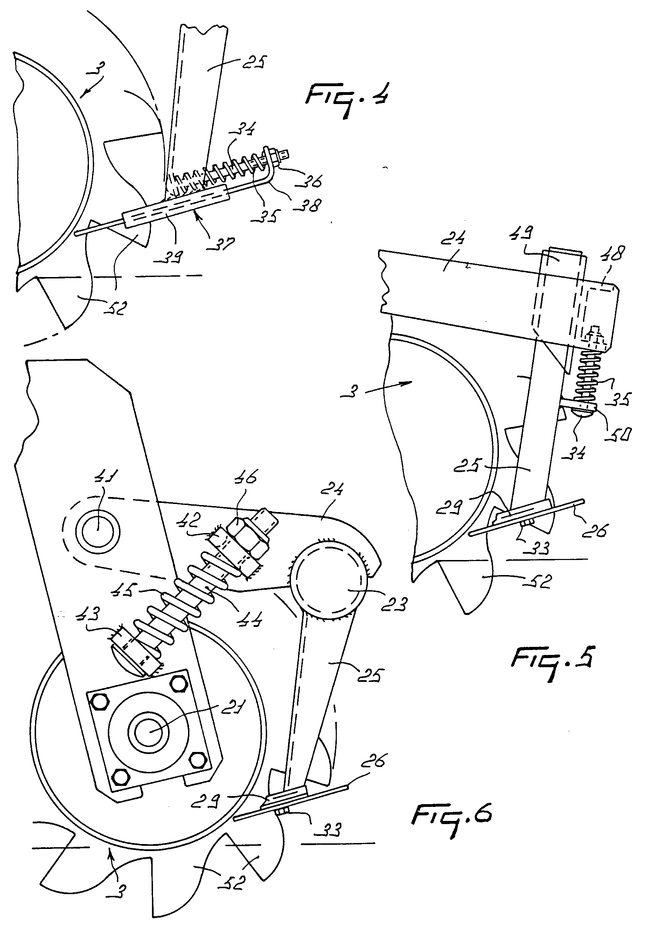

Figure 4 shows an embodiment in which the operating principle of the invention is realized using a sliding structure instead of a pivotal structure. The end section of the support 25 is formed in this embodiment by a plate 37 having downwardly and inwardly curving edges 39, such that a scraper 28 can rest therein capably of sliding. The rearmost end of the scraper is folded and provided with a bore such, that a carriage bolt 34 can be passed parallel to the scraper 38 between the U-shaped support 25 and the folded-over portion of the scraper 38. Between the back of the support 25 and the folded-over portion of the scraper 38 there is disposed around the carriage bolt 34 the push spring 35 which pushes the scraper 38 away from the roller 3. The motion is counteracted by the nut 36 turned on the carriage bolt behind the folded-over scraper portion.

In a third embodiment, as shown in Figure 6, the overall assembly of carrier 23, supports 25 and scraper 26 is movable, relative to the arms 18 of the roller 3 with the aid of a reinforced bolt/spring combination. The carrier arms 24 are fastened to the arms 18 of the roller 3 capably of pivoting about a shaft 41. At their outer sides, the carrier arms 24 are provided with a wide-bore eye 42 mounted perpendicularly to the carrier arm. At their outer sides, between the pivotal shaft 41 for the carrier arms 24 and the rotary shaft 21 of the roller 3, the roller arms 18 are provided with a supporting plate 43 arranged perpendicularly to the roller arms. This supporting plate 43 is provided with a square hole for accommodating the square portion of a heavy carriage bolt 44. Disposed between the supporting plate 43 and the eye 42 is a heavy-duty push spring 45, through which the carriage bolt 44 is passed, whilst also in this case a nut 46 is turned, on the bolt end, in such a manner that the structure works along the same operating principle as described in the embodiments described hereinbefore. For the purpose of reinforcing the structure, one or a plurality of supports can be welded to those sides of the eye 42 and the supporting plate 43 that are opposite the spring.

In a fourth embodiment, as illustrated by Figure 5, the operating principle described in the foregoing is implemented as a structure in which a support 25 is slidable in the upward direction relative to the U-profile carrier 48. A square tubular section 49 acting as a guide is welded to the carrier 48. A close fitting support 25 is slidable through this tubular section 49. Against the rear side of the support 25 there is fitted perpendicularly thereto a supporting plate 50, which plate 50 is provided with a close fitting square hole for accommodating the square portion of a carriage bolt 34. The carrier 48 is provided with a bore which is a wide fit for the bolt 34, so that the previously described structure in which the spring 35 is arranged around the carriage bolt 34 can again be used, the carriage bolt 34 in this case extending parallel to the support 25. Although the carrier 28 in Figure 6 is made of channel-section iron, a round profile may alternatively be used when a bolt of greater length is used. In that case the bolt is entirely passed through the round carrier, so that the nut can be mounted on the bolt at the outer side of the carrier.

Although this is not shown in one of the drawings, it will be obvious that it is alternatively possible to make the support from cast iron instead of from channel profile iron. When cast iron is used, the base forms one integral whole with the support and material can be saved by having the support merge partly into a triangular profile. It will be obvious that the scraper structures described can be used also with other types of soil cultivating machines, such as rotary cultivators.

## Claims

1. A soil cultivating machine having a frame (1) which is couplable to a tractor and is provided with soil working members (2) as well as with a packer roller (3) connected to the frame (1) via one or more arms (18), whilst furthermore a carrier (23) coupled to the arms (24) is present at the rear side of the roller, one or a plurality of scrapers (26) for scraping the cylindrical surface of the roller and arranged movably relative to the roller, being connected to this carrier (23) by means of supports (25), characterized in that means (30, 32, 34, 35, 36, 39, 42 - 46, 49, 50) are present for keeping a scraper (26) which is movable relative to the roller (3) at a relatively short but maximum and adjustable distance from the roller (3) by spring action, the means comprising a pressure spring (35, 45) and a bolt/nut connection.

2. A soil cultivating machine as claimed in claim 1, characterized in that the maximum setting is effected with the aid of the bolt/nut connection (34, 36, 44, 46).

3. A soil cultivating machine as claimed in claim 1 or 2, characterized in that the spring element (34, 35) is provided around the bolt.

4. A soil cultivating machine as claimed in claim 1, 2 or 3, characterized in that the support (25) is pivotably connected to the carrier (23), the spring element (35) being operative between support (25) and carrier (23).

5. A soil cultivating machine as claimed in claim 5, characterized in that the carrier (23) includes connecting plates (28) which are mounted perpendicularly to the carrier (23) to which and wherebetween the support (25) is pivotably mounted.

6. A soil cultivating machine as claimed in claim 6, characterized in that a cross-connection (32) against which one of the ends of the spring element (35) bears is arranged between the connecting plates (28).

7. A soil cultivating machine as claimed in any one of the preceding claims, characterized in that the carrier (23) is pivotably connected to the roller arms (18) via carrier arms (24) which are rigidly connected to the carrier (23) and together with the carrier (23) constitute a carrier structure, the spring element (45) being operative between the carrier structure and the roller arms (18).

8. A soil cultivating machine as claimed in any one of the preceding claims, characterized in that the carrier (23) includes slide-like elements (49) in which the support (25) is slidable, the support (25) having a stop (50) onto which the spring element (35) acts.

9. A soil cultivating machine as claimed in any one of the preceding claims, characterized in that the support (25) incorporates slide-like elements (37, 39) in which the scraper (26) is slidable, the scraper (26) having a stop (38) onto which the spring element acts.

## Patentansprüche

1. Bodenbearbeitungsmaschine mit einem Rahmen (1), der an einen Schlepper anzuschließen und mit Bodenbearbeitungsgliedern (2) sowie mit einer Packerwalze (3) versehen ist, die durch einen oder mehrere Arme (18) mit dem Rahmen (1) verbunden ist, wobei ferner an der Rückseite der Walze ein mit den Armen (24) verbundener Träger (23) vorgesehen ist, und wobei ein oder mehrere Abstreifer (26), die zum Abstreifen der zylindrischen Oberfläche der Walze bestimmt und relativ zu der Walze beweglich angeordnet sind, durch Stützen (25) mit diesem Träger (23) verbunden sind,
dadurch gekennzeichnet, daß eine Vorrichtung (30, 32, 34, 35, 36, 39, 42-46, 50) vorhanden ist, mittels der ein relativ zu der Walze (3) beweglicher Abstreifer (26) durch Federkraft in einem relativ geringen, aber größtmöglichen und verstellbaren Abstand zu der Walze (3) zu halten ist, wobei die Vorrichtung eine Druckfeder (35, 45) und eine Bolzen-Mutter-Verbindung aufweist.

2. Bodenbearbeitungsmaschine nach Anspruch 1,
dadurch gekennzeichnet, daß die bestmögliche Einstellung mittels der Bolzen-Mutter-Verbindung (34, 36, 44, 46) erzielt wird.

3. Bodenbearbeitungsmaschine nach Anspruch 1 oder 2,
dadurch gekennzeichnet, daß das Federelement (34, 35) den Bolzen umgibt.

4. Bodenbearbeitungsmaschine nach Anspruch 1, 2 oder 3,
dadurch gekennzeichnet, daß die Stütze (25) mit dem Träger (23) schwenkbar verbunden ist, wobei das Federelement (35) zwischen der Stütze (25) und dem Träger (23) wirksam ist.

5. Bodenbearbeitungsmaschine nach Anspruch 4,
dadurch gekennzeichnet, daß der Träger (23) Verbindungsplatten (28) aufweist, die senkrecht zu dem Träger (23) angeordnet sind, wobei die Stütze (25) zwischen den Verbindungsplatten an diesen schwenkbar angebracht ist.

6. Bodenbearbeitungsmaschine nach Anspruch 5,
dadurch gekennzeichnet, daß zwischen den Verbindungsplatten (28) ein Querträger (32) angeordnet ist, an dem ein Ende des Federelementes (35) anliegt.

7. Bodenbearbeitungsmaschine nach einem der vorhergehenden Ansprüche,
dadurch gekennzeichnet, daß der Träger (23) mit den Walzentragarmen (18) durch Tragarme (24) schwenkbar verbunden ist, die mit dem Träger (23) starr verbunden sind und zusammen mit ihm eine Tragkonstruktion bilden, wobei das Federelement (45) zwischen der Tragkonstruktion und den Walzentragarmen (18) wirksam ist.

8. Bodenbearbeitungsmaschine nach einem der vorhergehenden Ansprüche,
dadurch gekennzeichnet, daß der Träger (23) schieberartige Elemente (49) aufweist, in denen die Stütze (25) verschiebbar ist, wobei die Stütze (25) einen Anschlag (50) aufweist, an dem das Federelement (35) anliegt.

9. Bodenbearbeitungsmaschine nach einem der vorhergehenden Ansprüche,
dadurch gekennzeichnet, daß die Stütze (25) schieberartige Elemente (37, 39) aufweist, in denen der Abstreifer (26) verschiebbar ist, wobei der Abstreifer (26) einen Anschlag (38) aufweist, an dem das Federelement anliegt.

## Revendications

1. Dispositif de labourage ayant un châssis (1) qui peut être couplé à un tracteur et qui est muni d'organes de travail du sol (2), ainsi que d'un rouleau compacteur(3) relié au châssis (1) par un ou plusieurs bras (18), tandis qu'en outre un élément porteur (23) couplé aux bras (24) est présent sur le côté postérieur du rouleau, un ou plusieurs racleurs (26) pour gratter la surface cylindrique du rouleau et étant montés mobiles par rapport au rouleau et étant reliés à cet élément porteur (23) au moyen de supports (25), **caractérisé** en ce que des moyens (30, 32, 34, 35 36, 39, 42 - 46, 49, 50) sont présents pour maintenir un racleur (26) qui est mobile par rapport au rouleau (3) à une distance relativement courte mais maximale et réglable du rouleau (3) par l'action d'un ressort, les moyens comprenant un ressort de pression (35, 45) et une liaison boulon/écrou.

2. Dispositif de labourage selon la revendication 1, caractérisé en ce que le réglage maximal est effectué à l'aide de la liaison boulon/écrou (34, 36, 44, 46).

3. Dispositif de labourage selon la revendication 1 ou 2, caractérisé en ce que l'élément à ressort (34, 35) est prévu autour du boulon.

4. Dispositif de labourage selon la revendication 1, 2 ou 3, caractérisé en ce que le support (25) est relié de manière pivotante à l'élément porteur (23), l'élément à ressort (35) agissant entre le support (25) et l'élément porteur (23).

5. Dispositif de labourage selon la revendication 4, caractérisé en ce que l'élément porteur (23) comporte des plaques de liaison (28) qui sont montées perpendiculairement à l'élément porteur (23) et entre lesquelles le support (25) est monté pivotant.

6. Dispositif de labourage selon la revendication 5, caractérisé en ce qu'une liaison transversale (32) contre laquelle porte une des extrémités de l'élément à ressort (35) est disposée entre les plaques de liaison (28).

7. Dispositif de labourage selon l'une quelconque des revendications précédentes, caractérisé en ce que l'élément porteur (23) est relié de manière pivotante aux bras (18) du rouleau par des bras porteurs (24) qui sont reliés rigidement à l'élément porteur (23) et constituent, ensemble avec l'élément porteur (23) une structure portante, l'élément à ressort (45) agissant entre la structure portante et les bras (18) du rouleau.

8. Dispositif de labourage selon l'une quelconque des revendications précédentes, caractérisé en ce que l'élément porteur (23) comporte des éléments (49) analogues à une glissière dans lesquels peut coulisser le support (25), le support (25) ayant une butée (50) sur laquelle agit l'élément à ressort (35).

9. Dispositif de labourage selon l'une quelconque des revendications précédentes, caractérisé en ce qu'au support (25) sont incorporés des éléments (37, 39) analogues à une glissière dans lesquels peut coulisser le racleur (26), le racleur (26) ayant une butée (38) sur laquelle agit l'élément à ressort.
